**Europäisches Patentamt**

**European Patent Office**

**Office européen des brevets**

(19)

(11) Veröffentlichungsnummer: **0 356 958**
**A2**

(12) # EUROPÄISCHE PATENTANMELDUNG

(21) Anmeldenummer: **89115830.5**

(22) Anmeldetag: **28.08.89**

(51) Int. Cl.⁵: **C01G 21/06**

(30) Priorität: **31.08.88 DE 3829534**

(43) Veröffentlichungstag der Anmeldung:
**07.03.90 Patentblatt 90/10**

(84) Benannte Vertragsstaaten:
**DE ES FR GB IT**

(71) Anmelder: **HEUBACH & LINDGENS GMBH & CO KG**
**Heubachstrasse**
**D-3394 Langelsheim(DE)**

(72) Erfinder: **Marx, Reinhard, Dr. Dipl.-Ing.**
**Am Butterberg 6**
**D-3388 Bad Harzburg(DE)**

(74) Vertreter: **Patentanwälte Deufel- Schön- Hertel- Lewald- Otto**
**Isartorplatz 6 PO Box 260247**
**D-8000 München 26(DE)**

(54) **Verfahren zum Fertigbrennen von Bleiglätte.**

(57) Das erfindungsgemäße Verfahren zur Herstellung von technischer Bleiglätte von mehr als 99,98, vorzugsw. mehr als 99,99 Gew.-% Oxidgehalt, wobei flüssiges Blei unter im zeitlichen Durchschnitt konstanter und gleichmäßiger Zufuhr in erhitzter Form in einen Reaktor eingeführt, die Reaktionstemperatur auf eine Temperatur im Bereich von über 500° C bis 680° C eingestellt wird und das so erhaltene Rohoxid mit einem Oxidationsgrad von ca. 99,7 % weiteroxidiert wird, ist dadurch gekennzeichnet, daß in der ersten Stufe bei der Herstellung des Rohoxides mit einem Oxidationsgrad von ca. 99,7 % das mit der Reaktionsluft ausgetragene Produkt aus dieser ausgefiltert und in den Reaktor zurückgeführt wird, wobei, wenn sich im Reaktor genug Oxid angesammelt hat, die Bleizufuhr und die Filteroxidrückführung unterbrochen werden und nur noch Luft eingeblasen und die auf einen Restgehalt an metallischem Blei von höchstens 0,01 % oxidierte Füllung nicht vollständig sondern nur bis zu etwa 50 % ausgetragen wird.

_Abbildung 1_

_Schema der einstufigen Glätteerzeugung_

| | |
|---|---|
| 15 | Thermoelement |
| 14 | Oxidbunker |
| 13 | Filterexhaustor |
| 12 | Filter für Förderluft |
| 11 | Zyklon |
| 10 | Gebläse für Förderluft |
| 9 | Durchblasschleuse |
| 8 | Oxidaustrag |
| 7c | Filteroxid-Rückführung |
| 7b | Fallschlitz |
| 7a | Reaktorabluft, staubhaltig |
| 7 | Filter für Reaktorluft |
| 6 | Rührwerk |
| 5 | Frischluft |
| 4 | Reaktor |
| 3 | Dosiertopf |
| 2 | Schmelzkessel |
| 1 | Barrendosierung |

Die Herstellung von handelsüblichem Bleioxid, das ist die sogenannte Bleiglätte (PbO) erfolgte früher in mindestens zwei Verfahrensschritten:

1. Voroxidation von metallischem Blei in einem Rührwerksreaktor und

2. Fertigbrennen des Rohoxids in einem zweiten Brennofen.

Die Trennung der beiden Schritte hatte seine Ursache darin, daß die Fertigoxidation unverhältnismäßig längere Zeit benötigte als die Voroxidation, so daß ein zweites, fremdbeheiztes Aggregat erforderlich war. Die Voroxidation im Rührwerksreaktor bedurfte demgegenüber keiner thermischen Fremdenergie, da die Oxidationswärme des Bleis den Prozeß auf Reaktionstemperatur halten kann.

Um diesen Nachteil zu beheben, wurde schon in der DE-AS 14 67 347 ein einstufiges Verfahren zur Herstellung von technischer Bleiglätte entwickelt, wobei ein Luftstrom in das Reaktionsgefäß eingeleitet und geschmolzenes Blei in einem kontinuierlichen Strom in einer solchen Geschwindigkeit dem Gefäß zugeführt wird, daß der Gefäßinhalt auf einer Durchschnittstemperatur von zumindest der Schmelztemperatur des metallischen Bleis gehalten wird, wobei durch Einleiten des Luftstroms in den unteren Teil des Gefäßes zu jedem Zeitpunkt des Verfahrens ein Schaum aus Teilchen aus metallischem Blei und Bleiglätte in dem Gefäß aufrechterhalten wird und der Gefäßinhalt durch an sich bekanntes Aufspritzen auf eine große, feststehende Stauscheibe derart kräftig bewegt wird, daß das Gefäß von jeder größeren Ansammlung von geschmolzenem Blei freigehalten wird. Dabei wird das mit der Reaktionsluft ausgetragene Produkt teilweise ausgefiltert und in den Reaktor zurückgeführt, wobei der Zyklon das Filter für die größeren und schwereren Teilchen darstellt. Allerdings wird nach diesem Verfahren nur Bleiglätte mit maximal 99,04 % PbO erhalten. Eine Verbesserung hinsichtlich des PbO-Gehaltes zeigt ein weiteres einstufiges Verfahren, wobei flüssiges Blei unter im zeitlichen Durchschnitt konstanter und gleichmäßiger Bleizufuhr mit Luft in einen Glättereaktor eingeführt, z.B. die Reaktionstemperatur auf den Bereich von über 500°C bis 640°C eingestellt wird. Um die vorgegebene Rekationstemperatur um nicht mehr als ± ca. 5°C schwanken zu lassen, wird bei Bedarf der Luftstrom minimal verändert. Dieses einstufige Verfahren zur Herstellung von Bleiglätte ist in der DE-OS 30 16 984 bzw. der EP-A 0039478 beschrieben, wobei sich ein Rohoxid mit einem Oxidationsgrad von 99,7 bis 99,8% ergibt. Die Schüttung des Produktes wird durch ein Rührwerk intensiv bewegt.

Es ist aber häufig notwendig, einen höheren Oxidationsgrad zu haben, so daß das so erzeugte Rohoxid von 99,7 is 99,8% PbO-Gehalt "fertigoxidiert" werden muß.

Dies würde erneut ein zweistufiges Verfahren mit all den aus dem früheren Stand der Technik bekannten Nachteilen erfordern, nämlich einen Zeitaufwand von mehreren Stunden für die Fertigoxidation, wobei als Richtzahl ca. 2 Stunden für Bleiglätte genannt werden können, sowie ein technisch aufwendiges Brennaggregat und einen Brennstoffaufwand von ca. 200000 kcal/t Glätte, wozu noch ein erheblicher elektrischer Energieverbrauch für diverse Antriebe kommt.

Es war auch mit dem obengenannten einstufigen Verfahren gemäß DE-OS 30 16 984 bzw. EP-A 0 039 478 nicht möglich, Pb-Oxidgehalte von 99,8 % zu überschreiten.

Es wurde aber nun überraschenderweise gefunden, daß man das Verfahren der genannten DE-PS und EP-PS weiter verbessern kann, wenn man die Oxidierung des metallischen Bleis so abwandelt, daß unter Verwendung eines bekannten Rührwerksreaktors z.B. des Typs "Barton" oder "HEUBACH" der Prozeß in Zyklen geführt wird. Es werden also verschiedene Parameter bewußt nicht konstant gehalten sondern, abweichend von der DE-AS 30 16 984 bzw. EP-A 0 039 478 nach dem jeweils gewünschten und erforderlichen Schema in sich ständig wiederholenden Zyklen variiert:

Im einzelnen wird folgendermaßen gearbeitet:

1. In den auf Reaktionstemperatur befindlichen Reaktor wird flüssiges Blei dosiert wie dies auch bisher der Fall war.

2. Die gleichzeitig eingeblasene Oxidationsluft wird abgezogen, filtriert und das mitgerissene, ausgefilterte Oxid in den Reaktor zurückgeführt.

3. Wenn ein bestimmter Füllgrad des Reaktorgefäßes erreicht ist, wird sowohl die Bleidosierung als auch die erwähnte Rückführung des Filteroxids unterbrochen und die Fertigoxidation beginnt.

4. Nach erfolgter Fertigoxidation wird das Produkt vom Boden des Reaktors über ein geeignetes Austragsaggregat abgezogen, wobei jedoch eine bestimmte Restmenge im Reaktor verbleiben muß, damit der Zyklus wieder von vorne beginnen kann.

Damit ist das bisher bekannte Verfahren der einstufigen Oxidation vor allem in zwei Punkten verändert:

- Das mit der Luft mitgerissene Oxid wird zurückgeführt; und - das Fertigprodukt wird nicht ganz, sondern nur etwa zur Hälfte ausgetragen, und dies erfolgt mechanisch und nicht pneumatisch (d.h. nach unten und nicht nach oben).

Vorzugsweise erfolgt auch das Rühren von unten, da sich hierbei ein ziemlich schnell laufender Rührer mit angeschrägten Rührerflügeln bautechnisch leichter einsetzen läßt, der eine stärkere Durchmischung und somit eine bessere Verteilung von Sauerstoff in der Schüttung bewirkt.

Im übrigen können alle Prozeßparameter in der bisher üblichen Weise geregelt werden. Besonders wichtig ist die Reaktionstemperatur, für deren Steuerung außer der sonst gebräuchlichen Veränderung der Blei- oder Luftdosierung auch das Einspritzen von Wasser vorteilhaft ist, wenn man etwas kühlen will. Insgesamt muß der Prozeßschritt der Voroxidation allerdings so geführt werden, daß bereits ein Oxidationsgrad von weit über 99% erreicht wird, vorzugsweise 99,7 bis 99,8%, wie dies gemäß der erwähnten DE-AS und EP-A möglich ist, da sich andernfalls der zweite Teilschritt nicht erfolgreich ausführen läßt.

Auf diese Weise wird es möglich, den einstufig erzielbaren PbO-Gehalt von 99,7 bis 99,8 nochmals wesentlich zu steigern, nämlich auf mindestens 99,99, indem zwar scheinbar wieder zweistufig gearbeitet wird, jedoch kann der Gesamtprozeß in der geschilderten Weise erfolgreich in kurzer Zeit deswegen durchgeführt werden, weil die sich sonst beim zweistufigen Prozeß über Stunden erstreckende Fertigoxidation in wenigen Minuten erfolgt, so daß auch keine thermische Fremdenergie zugeführt werden muß, insbesondere, wenn der Reaktor gut isoliert ist. Die Durchsatzleistung eines Reaktors, der statt eines Rohoxids ein Fertigoxid erzeugt, ist zwar etwas geringer, jedoch steht dieser geringfügige Nachteil in keinem Verhältnis zu dem Aufwand, der sonst für eine echte zweite nachgeschaltete Prozeßstufe gemacht werden müßte.

Für die Herstellung von Glätte ergibt sich bei Anwendung obiger Prinzipien das überraschende Resultat, daß das Fertigbrennen in einem Reaktor üblicher Größe in ca. 3 Minuten möglich ist. Auf dieser Erkenntnis aufbauend, wurde ein einstufiger Glätte-Prozeß entwickelt, der das gleiche Aggregat zum Fertigbrennen wie zur Voroxidation benutzt. In dem Reaktor wird zunächst gemäß DE-AS 3016984 bzw. EP-A 0039478 ein Rohoxid mit einem Oxidationsgrad von ca. 99,7 % erzeugt; in Abwandlung des in den aufgeführten Patentschriften beschriebenen Verfahrens wird allerdings das mit der Reaktionsluft ausgetragene Produkt aus dieser ausgefiltert und in den Reaktor zurückgeführt. Sobald sich im Reaktor genügend Rohoxid angesammelt hat, wird die Bleizufuhr und Filteroxidrückführung unterbrochen und nur noch Luft eingeblasen; innerhalb von wenigen Minuten ist dann die Füllung bis auf einen Restgehalt an metallischem Blei von 0,01 % oxidiert. Die Temperatur sinkt dabei nur wenig und in durchaus zulässigem Maße ab. Das Fertigprodukt wird anschließend über eine Austragsschleuse am Boden des Reaktors teilweise ausgetragen; ein Rest verbleibt im Reaktor, da nur so der nächste Zyklus zur Erzeugung von Rohoxid wieder einwandfrei gestartet werden kann. Als Rest, der im Reaktor verbleiben kann, wird zweckmäßig etwa die Hälfte im Reaktor belassen, jedoch kann diese Menge auch etwas höher sein. Der Ausdruck "genügend Rohoxid", das sich im Reaktor angesammelt hat, bedeutet eine solche Menge, wie sie der Rührer noch gut bewegen kann, was natürlich von der Art des Rührers und der Reaktorform abhängt. Der Temperaturabfall bei der Fertigoxidation beträgt im Durchschnitt weniger als 50 $^{\circ}$ C, bei guter Verfahrensführung auch nur ca. 20 $^{\circ}$ C.

Ein gesamter Zyklus beansprucht etwa 80 % der Zeit zur Herstellung von Rohoxid und 20 % für die Fertigoxidation einschließlich der Entleerung. Bei einer Fertigbrennzeit von ca. 3 min bedeutet dies eine Gesamtzeit von ca. 15 min bis 20 min (wenn man zur Fertigbrennzeit von 3 min noch eine 1-2 minütige Entleerzeit zählt).

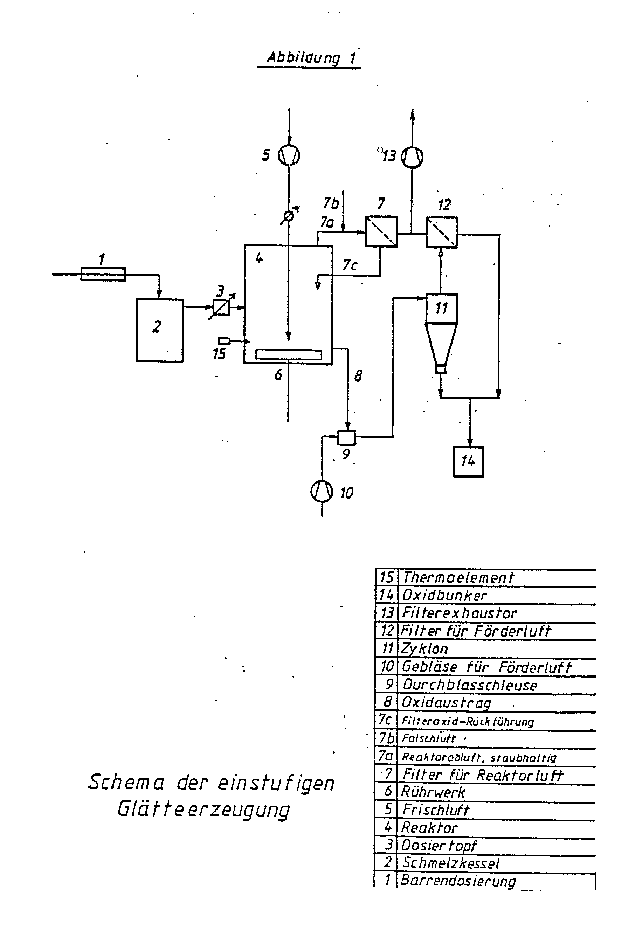

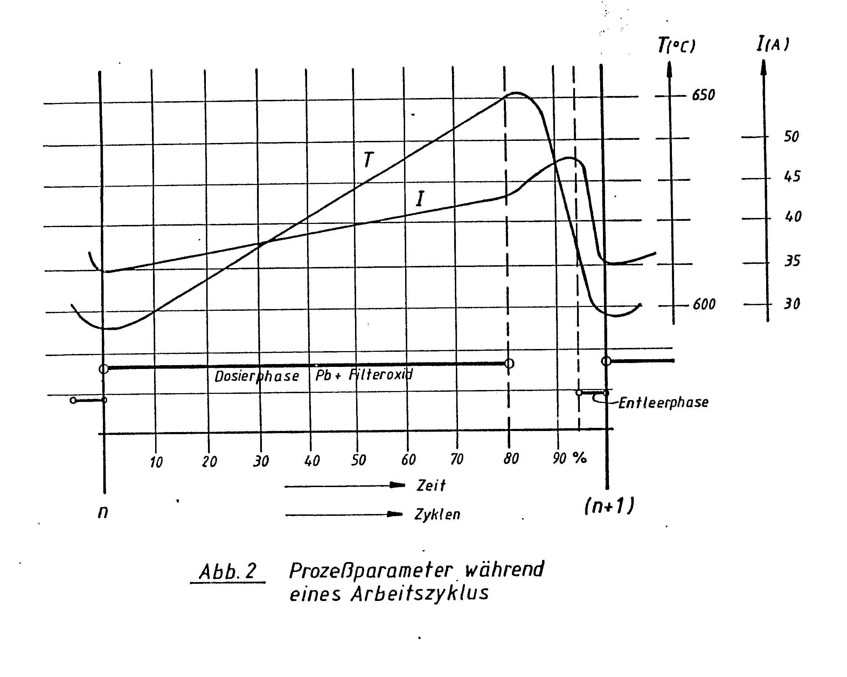

In den beigefügten Zeichnungen sind in Abbildung 1 die Verfahrensapparatur und in Abbildung 2 die Verfahrensführung schematisch dargestellt.

In dem Rührwerksreaktor 4 mit dem Rührwerksantrieb 6 erfolgt über den Dosiertopf 3 die Bleizuführung, wobei dieser Zulauf auch eine Düse sein kann, die gemäß der EP-A 0039478 bzw. DE-AS 3016984 arbeitet. Über die Leitung 5 erfolgt die Zufuhr der Primärluft und über die Leitung 7a, das Filter 7 und den Abluftexhaustor 13 erfolgt der Abzug der Luft, wobei über eine in 7a mündende Leitung 7b Falschluft zutreten kann und über Filter 7 das mit der Abluft abgehende Oxid zurückgehalten wird, das über die Leitung 7c in den Reaktor zurückgeführt wird. Über die Leitung 5 kann auch Sauerstoff zugeführt werden, was bei der Nachoxidation die Luftzufuhr ergänzen oder ersetzen kann. Über 8 und vorzugsweise 11 wird das Fertigprodukt ausgetragen, wenn es den hinreichenden Oxidationsgrad erzielt hat. Es wird also bei 8 das Fertigoxid mechanisch abgezogen und dieses dann entweder direkt ausgetragen oder vorzugsweise über die Durchblasschleuse 9 in den Zyklon 11 geblasen, wo gewünschtenfalls Grobanteile, z.B. Teilchen über 100 $\mu$m abgetrennt werden können. Dieses Abtrennen kann natürlich auch beim weiteren Transport aus dem Oxidbunker 14 erfolgen. In 4 wird über ein Thermoelement 15 die Reaktionstemperatur gemessen und gesteuert. Diese Steuerung wird in Kombination mit der Analyse des Reaktionsproduktes natürlich auch für das Zudosieren von Blei, Primärluft, Sauerstoff und Wasser benutzt und steuert auch, vorzugsweise über die Stromaufnahme des Rührwerksantriebes 2 den Austrag des Reaktionsproduktes.

Wie erwähnt, wird das Reaktionsprodukt nicht vollständig ausgetragen, sondern nur höchstens zur Hälfte, um die Fertigoxidation der nächsten Charge zu erleichtern. Diese im Reaktor verbleibende Restfüllung kann bis zu 2/3 betragen. Der Ausdruck "Hälfte" bzw. "2/3" bezieht sich, wie auf diesem Fachgebiet üblich, immer auf die Rührwerkskapazität und nicht auf das Reaktorvolumen.

Das folgende Arbeitsbeispiel zeigt den Prozeß der Glätteherstellung im einzelnen:

In einen runden Reaktor mit z.B. 800 mm Durchmesser, der zu 65 % der Rührwerkskapazität mit Bleioxid gefüllt und der auf 590°C aufgeheizt ist, wird gleichmäßig Blei und Luft eindosiert - z.B. 230 kg Pb/h und 150 m³ Luft/h. Im Laufe von etwa 25 min füllt sich der Reaktor soweit, daß die Kapazität des Rührwerks ausgeschöpft ist, die Temperatur steigt auf 650°C. An dieser Stelle wird die Bleizufuhr und die Rückführung des Filteroxides unterbrochen, der Prozeßschritt der Fertigoxidation beginnt. Für die Dauer von 3 - 4 min wird der Reaktorinhalt nur unter Zufuhr von Luft durchgerührt, anschließend eine Menge von ca. 100 kg aus dem Reaktor über ein spezielles Austragsaggregat ausgefahren, was weiterhin ca. 2 min in Anspruch nimmt. Die Temperatur sinkt während der Fertigoxidation und des Austragens um etwa 50°C; nach Abschluß der beiden Prozeßschritte ist der Anfangszustand wieder erreicht und der nächste Zyklus beginnt, indem die Bleidosierung wieder eingeschaltet wird und auch das Filteroxid wieder zuläuft.

Der Temperaturabfall kann durch gute Isolation des Reaktors verringert werden, jedoch kann ein Temperaturabfall bis zu 50°C zugelassen werden.

Prozentual nimmt die Voroxidation ca. 80% der Gesamtzeit in Anspruch, so daß das Ausbringen dieses kleinen Reaktors rund 200 kg Bleixoid je Stunde beträgt. Das erzeugte Oxid ist frei von $PbO_2$-Anteilen und weist einen Restanteil an freiem Blei von weit unter 0,01 % auf. Damit entspricht es allen Spezifikationen für handelsübliche Bleiglätte.

Das Diagramm auf der Abbildung 2 veranschaulicht im Detail einen Arbeitszyklus.
Das Diagramm von Abbildung 2 zeigt Temperaturverlauf und Stromaufnahme des Rührwerks des Glättereaktors während eines Arbeitszyklus. Die mit T bezeichnete Kurve zeigt im ansteigenden Teil die Temperaturerhöhung während der Dosierphase, also während der Phase, in welcher Blei in den Reaktor eindosiert und zu Bleiglätte oxidiert wird. Im absteigenden Teil zeigt diese Kurve die Phase der Fertigoxidation und der Entleerung, wobei diese Phasen in Prozent der Gesamtzeit eines Arbeitszyklus angegeben sind, da die Absolutzeit ja von mehreren Faktoren abhängt, vor allem aber von der Reaktorgröße.
Die Kurve I zeigt die Stromaufnahme in Ampere, die der Antriebsmotor des Reaktors während des Arbeitszyklus aufnimmt. Man sieht, daß diese Größe, die der Rührwerksenergie proportional ist, für die Fertigoxidation erst stark ansteigt und in der Entleerungsphase natürlich schnell abnimmt, da hier der Rührer entlastet wird. An der linken Ordinate, die mit n bezeichnet ist, ist links noch die Entleerungsphase des vorhergehenden Zyklus angegeben, während an der rechten, mit n + 1 bezeichneten Ordinate die nächste Dosierphase angesetzt ist. Das gleiche gilt für den Temperaturverlauf und Energieverlauf der Kurven T und I.

Dieses Arbeiten in Zyklen gestattet somit die praktisch einstufige Erzeugung von Bleiglätte mit mehr als 99,99% Reinheit, was bisher nur zweistufig durch Rohoxidation und getrennt davon erfolgende Nachoxidation möglich war.

## Ansprüche

1. Verfahren zur Herstellung von technischer Bleiglätte von mehr als 99,98, vorzugsweise mehr als 99,99 Gew.-% Oxidgehalt, wobei flüssiges Blei unter im zeitlichen Durchschnitt konstanter und gleichmäßiger Zufuhr in erhitzter Form in einen Reaktor eingeführt, die Reaktionstemperatur auf eine Temperatur im Bereich von über 500°C bis 680°C eingestellt wird und das so erhaltene Rohoxid mit einem Oxidationsgrad von ca. 99,7 % weiteroxidiert wird, dadurch gekennzeichnet, daß in der ersten Stufe bei der Herstellung des Rohoxides mit einem Oxidationsgrad von ca. 99,7 % das mit der Reaktionsluft ausgetragene Produkt aus dieser ausgefiltert und in den Reaktor zurückgeführt wird, wobei, wenn sich im Reaktor genug Oxid angesammelt hat, die Bleizufuhr und die Filteroxidrückführung unterbrochen werden und nur noch Luft eingeblasen und die auf einen Restgehalt an metallischem Blei von höchstens 0,01 % oxidierte Füllung nicht vollständig sondern nur bis zu etwa 50 % ausgetragen wird.

2. Verfahren nach Anspruch 1, dadurch gekennzeichnet, daß für den ersten Teil eines Arbeitszyklus zur Herstellung des Rohoxides etwa 80 % der Gesamtzeit und für die Fertigoxidation einschließlich der Entleerung ca. 20 % der Gesamtzeit benutzt werden.

3. Verfahren nach Anspruch 1 oder 2, dadurch gekennzeichnet, daß im Glättereaktor das Produkt durch ein intensives Rührwerk in fließbettähnlicher Form in Schwebe gehalten wird.

4. Verfahren nach einem der Ansprüche 1 bis 3, dadurch gekennzeichnet, daß das Fertigprodukt in gesteuerten Zyklen und Anteilen der Gesamtfüllung am Boden des Reaktors ausgeschleust wird.

Abbildung 1

Schema der einstufigen
Glätteerzeugung

| | |
|---|---|
| 15 | Thermoelement |
| 14 | Oxidbunker |
| 13 | Filterexhaustor |
| 12 | Filter für Förderluft |
| 11 | Zyklon |
| 10 | Gebläse für Förderluft |
| 9 | Durchblasschleuse |
| 8 | Oxidaustrag |
| 7c | Filteroxid-Rückführung |
| 7b | Falschluft |
| 7a | Reaktorabluft, staubhaltig |
| 7 | Filter für Reaktorluft |
| 6 | Rührwerk |
| 5 | Frischluft |
| 4 | Reaktor |
| 3 | Dosiertopf |
| 2 | Schmelzkessel |
| 1 | Barrendosierung |

Abb. 2  Prozeßparameter während
eines Arbeitszyklus

EP 0 356 958 A2